Europäisches Patentamt

European Patent Office

Office européen des brevets

(19)

(11) Publication number: 0 339 401
A1

## EUROPEAN PATENT APPLICATION

(12)

(21) Application number: 89106742.3

(22) Date of filing: 14.04.89

(51) Int. Cl.⁴: **C23G 1/36**

(30) Priority: 18.04.88 FI 881812

(43) Date of publication of application:
02.11.89 Bulletin 89/44

(84) Designated Contracting States:
DE FR GB IT

(71) Applicant: **OUTOKUMPU OY**
**Töölönkatu 4**
**SF-00100 Helsinki 10(FI)**

(72) Inventor: **Koivunen, Timo Tapio**
**Ruispolku 2**
**SF-28450 Vanha-Ulvila(FI)**
Inventor: **Kuusisto Raimo Uolevi**
**Kalastajankuja 1D19**
**SF-02230 Espoo(FI)**

(74) Representative: **Zipse + Habersack**
**Kemnatenstrasse 49**
**D-8000 München 19(DE)**

(54) Method for regenerating pickling acids of zinc coating process.

(57) The invention concerns a method wherein hydrochloric acid, which is used especially for pickling steel before zinc coating, is regenerated by mixing it with sulphuric acid. Heating the mixture and concentrating it with regard to sulphuric acid causes the hydrochloric acid to distil into vapor phase while the metals that have been dissolved in the pickling acid remain in the sulphuric acid. By condensating the distillates, the hydrochloric acid may be reused in the pickling process. The metal sulphate salt produced in evaporation is filtered and can be utilized in zinc manufacturing process.

EP 0 339 401 A1

## METHOD FOR REGENERATING PICKLING ACIDS OF ZINC COATING PROCESS

The present invention concerns a method wherein hydrochloric acid, which is used especially for pickling steel before zinc coating, is regenerated by mixing it with sulphuric acid. Heating the mixture and concentrating it with regard to sulphuric acid causes the hydrochloric acid to distil into vapor phase while the metals that have been dissolved in the pickling acid remain in the sulphuric acid. By condensating the distillates, the hydrochloric acid may be reused in the pickling process. The metal sulphate salt produced in evaporation is filtered and can be utilized in zinc manufacturing process.

In zinc coating process of steel, pieces are carefully cleaned before zinc coating. In the pickling stage, the purpose is to remove all rust and metallic impurities from the surface of steel. Pickling is usually carried out in hydrochloric acid bath the concentration of which being in an area between 3 to 7%. The bath deteriorates when the metal content increases, and when the Fe-content surpasses 100 g/l, the pickling acid has to be changed.

Also sulphuric acid can be used in pickling but use of it is minor. The main reason for this is the fact the bath must be heated to a temperature of 50 - 70° C. Heating increases both apparatus and running costs.

A statute in Finland determines spent pickling acids as a hazardous waste. Until now small zinc coating plants have destroyed the spent acids by neutralizing them with lime and after that the waste precipitate has been taken to a dumping area with an exceptional permit. Now these permits have been cancelled and so the only alternative is the regeneration of the acids.

Before known are methods which are described for instance in DE patent application publications 1 546 164 and 1 771 054, where the spent pickling acid is thermally decomposed in a fluidized bed furnace to metal oxides and hydrochloric acid by using oxygen containing gases. Disadvantages of the method are expensive investment and running costs resulting from high temperatures in the fluidized bed furnace. In these conditions chloride bounds easily to metals which are dissolved in the acid and this decreases the recovery of the hydrochloric acid. A problem is also reusing of the zinc.

It is known from general chemistry that sulphuric acid as a stronger acid sets free hydrochloric acid which is chemically weaker than sulphuric acid, from its salts. In practice the reactions remain incomplete from view of separation of sulphates and chlorides, in normal temperature and pressure, in concentrated many component mixtures containing several metal salts. Such are e.g. pickling acids to be regenerated. Incomplete reactions are caused by reaction kinetic reasons, viscosity of solutions and interaction of ions. So the beforementioned chemical principe could not been utilized for regeneration of pickling acids originated in zinc coating processes, because the sulphate product to be separated from the mixture would contain too much chloride for utilizing the mixture e.g. in manufacturing processes of zinc metal where chloride is a very harmful process toxin, but this kind of product would form a new hazardous waste.

According to the method which is now developed, both the free hydrochloric acid of the spent pickling acid and the hydrochloric acid bound in all metals in the spent pickling acid, can all be reused, in practice free from metal. It is also essential for the method according to the invention that the metal sulphate crystal salt $(Fe(Zn)SO_4)$ forming in the method is chloride free, which makes possible to use the salt in manufacturing process of zinc metal. So this method makes the pickling process of zinc coating plants a process totally without waste. In addition, impurities dissolved from steel and other impurities in the pickling bath solution like calcium, potassium, sodium etc. cannot be concentrated to the regenerated hydrochloric acid. The essential features of the invention are apparent from the appended patent claims.

The method according to the invention offers also a possibility to treat the fluxing agent waste forming during hot zinc coating process to a valid product for further processing together with the regeneration of the pickling acid. With the fluxing agent, oxidizing of the pickled surface is prevented and the agent operates as a fluxing agent also in the proper hot dip. The waste which forms is a slightly acidic chloride salt solution containing ammonium, zinc and iron. When feeding the fluxing agent to the regenerating method according to the invention, there is formed in addition to the metal sulphate salt also ammonium sulphate salt in an immersion evaporation stage and the chlorides from the fluxing agent is recovered as hydrochloric acid together with the hydrochloric acid setting free from metal chlorides. The fluxing agent quantity to be fed to the immersion evaporation is usually minor compared to the pickling acid quantity to be regenerated.

The sulphate precipitate being chloride free can advantageously be fed to the beginning of the zinc process, either to the separation of iron or to a stage before that depending on the ratio of metal and acid in the precipitate. In this case also the ammonium contained in the fluxing agent can be utilized e.g. in the jarosite precipitating stage. The chemical formula of jarosite is $Me(Fe_3(SO_4)_2(OH)_6$, where Me is e.g. $NH_4$, K or Na. Alternatively, the sulphate precipitate containing acid can be treated hydrolytically in an autoclave before the zinc process and then iron precipitates as an oxide or a basic salt setting free simultaneously the acid bound to the metal.

The method according to the invention can be either a batch process or a continuous process, the choice depends mainly on the acid quantity to be regenerated.

The invention is explained in more detail below with reference to the appending drawing 1, which is a flow graph of the method.

The spent pickling acid, which usually contains hydrochloric acid 30 - 70 g/l and iron 50 - 100 g/l, zinc 20 - 40 g/l and minor quantities of other metals used for manufacturing of steel, is fed to an evaporator together with return sulphuric acid coming from the separation of sulphate precipitates. Evaporation is advantageously carried out in a so called immersion evaporator, where hot gases are conducted directly into the solution. Also the fluxing agent waste is fed to this stage. Because the fluxing agent quantity is small compared with the spent pickling acid quantity, its feed does not need to be continuous though the other process would be continuous, and so the feed of the fluxing agent is marked with broken line. In the evaporator the mixture is heated to the temperature 140 - 160°C, advantageously to the temperature 145 - 150°C, when the $H_2SO_4$ concentration is 70 - 80 %, advantageously 75 - 78% due to the fact that heating gases act as carrier gases. The carrier gases raise the vapor pressure of hydrochloric acid and water and so it is possible to reach sulphuric acid concentrations of 75 - 80% already in the temperatures mentioned before.

The sulphuric acid sets free chlorides bound to the metals as hydrochloric acid which is usually distilled with the free hydrochloric acid still remaining in the pickling acid. The reaction is naturally the faster the higher are the temperature and the $H_2SO_4$ concentration, but it is to be noted that when the temperature raises, also the partial pressure of the sulphuric acid will be raised. The exhaust gases are advantageously condensated in a venturi scrubber and the condensates, the pure hydrochloric acid and the water is recycled to the pickling stage.

Heating of the mixture can also be accomplished by electricity by fitting a.c. resistances either directly in the solution or by heating the reactor. In this case, however, the operating temperature will be higher, 200 - 220°C, beacuse heating gases which act as carrier gases are not conducted into the solution.

If the concentration of the sulphuric acid would be performed in reduced pressure, e.g. in a forced cycling vacuum evaporator, with sulphuric acid concentrations of 70 -75%, the operating temperature of the solution would be 80 - 90°C which is too low for reducing viscosity and decomposing complexes.

From the evaporation stage the metal sulphate - sulphuric acid sludge is conducted to filtering wherefrom the filtrate is recycled to the evaporation. In the evaporation make-up sulphuric acid is added, its quantity together with the remaining sulphuric acid in the sulphate precipitate being at least equivalent to the metals containing in the pickling acid. The chloride free sulphate precipitate is fed to the manufacturing process of zinc metal where also the remaining sulphuric acid of the precipitate can be reused.

Example

For the researches an immersion evaporator with conical bottom was constructed, having liquid capacity 20 l. Hot gases for concentrating of sulphuric acid and distilling hydrochloric acid, having a temperature about 800 - 900°C, were produced by burning L.P. gas in a combustion chamber of about 1 l capacity. The conditions prevailing in the apparatus could be stabilized by feeding spent pickling acid into the evaporator according to the surface level and removing hot sulphuric acid - sulphate sludge to filtration from the bottom of the evaporator according to the temperature. The distilled hydrochloric acid was washed from the exhaust gases to the indirect cooled washing liquid of the venturi scrubber. Depending on the air coefficient used in the combustion, 75 - 78 % $H_2SO_4$ concentration was reached at temperature 145 - 1 50°C, though in the immersion evaporator, the boiling point of $H_2SO_4$ is lowered the combustion gases acting as carrier gases. In researches there was used as a feed solution a spent pickling acid originating in a hot zinc coating plant, the analysis of the acid being:
Fe 82 g/l, Zn 34 g/l and free HCl 37 g/l.
The analysis of the regenerated acid was:
HCl 170 g/l, metals below 1 g/l.
The analysis of the sulphate precipitate filtered by a absorbent filter:
Fe 9.6%, Zn 3.8%, $H_2SO_4$ 41% an Cl below 0.1% (accuracy of analysis).

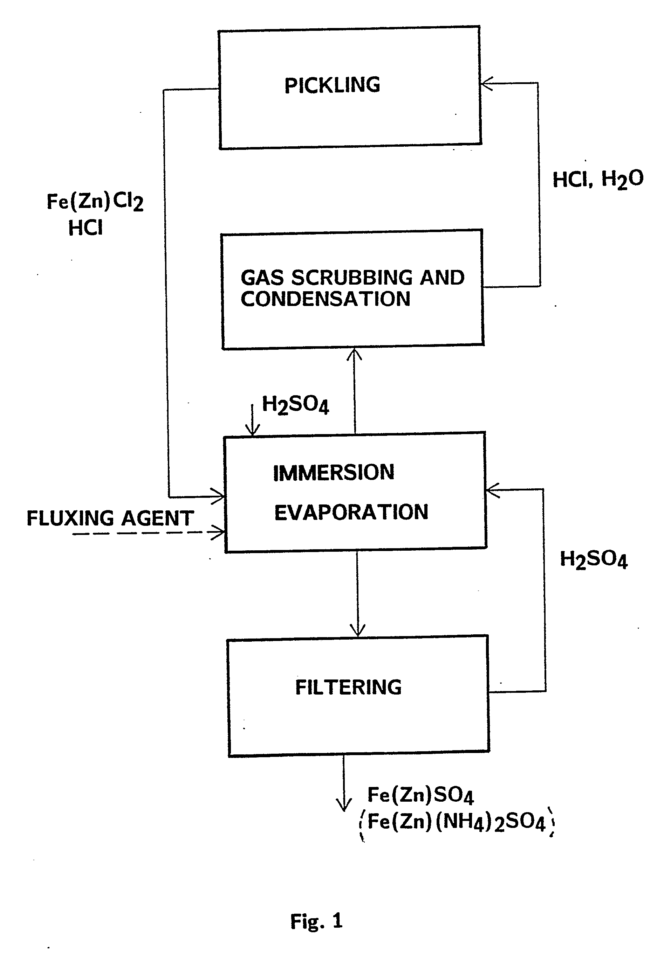

## Claims

1. A method for regenerating hydrochloric acid which is used as a pickling acid in zinc coating processes of steel, **characterized** in that the spent pickling acid where a part of the acid is bound to metals, is regenerated by mixing the pickling acid with sulphuric acid; heating the mixture and concentrating it with regard to sulphuric acid the metal chlorides dissolved to the pickling acid are caused to react to corresponding metal sulphates, and hydrochloric acid, both free and setting free from chlorides, to distil into vapor phase; the distilled exhaust gases are condensated and the pure hydrochloric acid and the water are recycled to pickling, the chloride free metal sulphate salt formed in the solution is separated from the sulphuric acid and reused in zinc manufacturing.

2. A method according to claim 1, **characterized** in that the mixture is heated by directing heating gases to the regeneration stage.

3. A method according to claim 2, **characterized** in that the mixture is heated to the temperature 140 - 160°C, advantageously to the temperature 145 -150°C.

4. A method according to claim 1, **characterized** in that the mixture is heated by electricity.

5. A method according to claim 4, **characterized** in that the mixture is heated to the temperature 200 - 220°C.

6. A method according to claim 1, **characterized** in that a fluxing agent is fed to the regeneration stage and then ammonium and metal chlorides dissolved in the fluxing agent are brought to react to corresponding sulphates, and the free hydrochloric acid and the hydrochloric acid setting free from chlorides and the water are brought to distil into vapor phase; the formed sulphates are separated from the sulphuric acid solution and are fed to the zinc manufacturing process.

7. A method according to claim 6, **characterized** in that the ammonium and metal sulphate salts are fed to zinc manufacturing and the ammonium sulphate is brought to react ammonium jarosite.

8. A method according to claim 1, **characterized** in that the sulphuric acid concentration in the regeneration is in the area 70 - 80%.

9. A method according to claim 1, **characterized** in that the sulphuric acid concentration in the regeneration is in the area 75 - 78%

10. A method according to claim 1, **characterized** in that the forming chloride free metal sulphate is an iron zinc sulphate.

11. A method according to claims 1 and 10, **characterized** in that the forming chloride free sulphate is an iron zinc sulphate containing calcium, potassium and sodium.

12. A method according to claims 6 and 10, **characterized** in that the forming chloride free sulphate is an iron zinc sulphate containing ammonium.

13. A method according to claims 11 and 12, **characterized** in that the forming chloride free sulphate is an iron zinc sulphate containing ammonium, calcium, potassium and sodium.

14. A method according to claim 1, **characterized** in that the distillate is condensated in a venturi scrubber.

15. A method according to claim 1, **characterized** in that in the regeneration stage make-up sulphuric acid is added, its quantity together with the remaining sulphuric acid in the sulphate precipitate being at least equivalent with the metals containing in the pickling acid.

Fig. 1

**EUROPEAN SEARCH REPORT**

Application Number

EP 89 10 6742

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| X | US-A-3 635 664 (Y. MORIMOTO)<br>* Claims 1,2 *<br>--- | 1,12 | C 23 G 1/36 |
| X | CHEMICAL ABSTRACTS, vol. 84, no. 8,<br>23rd February 1976, page 326, abstract<br>no. 48798c, Columbus, Ohio, US; &<br>NO-A-132 157 (T. THORSEN) 25-06-1973<br>* Abstract *<br>--- | 1,4 | |
| X | FR-A-2 156 845 (CATIONIC CORP.)<br>* Claims 1-5,8; page 3, lines 6-12;<br>page 4, lines 20-25 *<br>--- | 1 | |
| A | US-A-3 423 240 (T.H. OSTER)<br>--- | | |
| A | WO-A-8 100 728 (L.I. RENNERFELT)<br>--- | | |
| A | DE-B-2 633 872 (PREUSSAG AG METALL)<br>----- | | |
| | | | TECHNICAL FIELDS SEARCHED (Int. Cl.4) |
| | | | C 23 G 1/00<br>C 23 C 2/00<br>C 22 B 9/00 |

The present search report has been drawn up for all claims

| Place of search | Date of completion of the search | Examiner |
|---|---|---|
| THE HAGUE | 14-07-1989 | TORFS F.M.G. |